# FASCICULE DE BREVET EUROPEEN

(11) **EP 1 146 619 B1**
(45) Date de publication et mention de la délivrance du brevet: **24.05.2006**
(21) Numéro de dépôt: 01440071.7
(22) Date de dépôt: 14.03.2001
(51) Int. Cl.: H02B 1/015, H02B 1/20

(54) **Montant de châssis formant simultanément conduit de distribution et de répartition de l'énergie électrique**
Rahmenschenkel für ein Rahmengestell, als Leiter zur Verteilung elektrischer Energie
Frame upright serving as a conduit for distributing electrical energy

(30) Priorité: 11.04.2000 FR 0004648
(43) Date de publication de la demande: 17.10.2001
(73) Titulaire: HAGER ELECTRO S.A., F-67210 Obernai (FR)
(72) Inventeur: Wilhelm, Jean-François, 67300 Schiltigheim (FR); Deckert, Francis, 67190 Mutzig (FR); Genin, André, 67560 Rosheim (FR); Roiatti, Jean-Marie, 67210 Obernai (FR)
(74) Mandataire: Nuss, Pierre

(56) Documents cités:
- CH-A- 337 904
- FR-A- 987 516
- US-A- 5 326 934

## Description

La présente invention concerne le domaine des installations électriques, en particulier l'alimentation des coffrets ou armoires de distribution électrique, en vue de la répartition et de la distribution, et a pour objet un montant de châssis formant simultanément conduit de distribution et de répartition de l'énergie électrique à différents niveaux de branchement d'appareillages.

Actuellement, l'alimentation des coffrets ou armoires de distribution électrique est généralement effectuée par branchement d'un circuit électrique de puissance, par exemple sur un disjoncteur de branchement, puis par liaison des sorties de ce disjoncteur à différents appareils, tels que des interrupteurs, des interrupteurs différentiels, des disjoncteurs différentiels, etc..., ce avec répartition de l'énergie au moyen de barrettes de répartition.

Les différents appareils utilisateurs sont logés dans des coffrets ou armoires de distribution et montés en rangées dans ces coffrets ou armoires sur des rails de fixation coopérant à leurs extrémités avec des montants de châssis, chaque rangée d'appareils d'un rail de fixation étant alimentée par un ou plusieurs fils de distribution reliés aux barrettes de répartition, elles-mêmes reliées, par exemple, à un disjoncteur de branchement. La liaison électrique des différents appareils d'une même rangée montés sur un rail peut être effectuée, soit par liaison directe de chaque appareil à une barrette de distribution au moyen de fils, soit par l'intermédiaire de dispositifs de connexion connus du type barrettes reliant entres-elles les bornes de branchement desdits appareils, un appareil de chaque rangée étant alimenté à partir d'une barrette de distribution. De telles barrettes de distribution peuvent se présenter sous forme de canaux verticaux réalisés en tôle pliée ou sous forme de tubes (US-A-5 326 934, FR-A-987 516 et CH-A-337 904).

Cependant, ces canaux verticaux ne peuvent en aucun cas servir directement à la fixation de rails de montage d'appareillages de distribution et leur coût de production et d'installation est relativement élevé.

Il est également connu, par EP-A-0 818 072, de réaliser la connexion d'appareils électriques d'installation par enfichages de leurs contacts dans des logements correspondants prévus sur des barres d'alimentation reliées par des fils de branchement au circuit d'alimentation.

Ces montages connus de branchement des appareils utilisateurs branchés en parallèle à la sortie, par exemple, d'un disjoncteur de branchement permettent généralement une bonne distribution de l'énergie électrique. Toutefois, cette réalisation nécessite la mise en oeuvre d'un nombre important de fils électriques de branchement entre la ou les barrettes de distribution reliées audit disjoncteur ou analogue et chaque rangée d'appareils montés sur un rail.

En outre, la mise en oeuvre d'un nombre important de fils pose un problème d'accès individuel aux appareils ainsi que de débranchement ou de branchement individuel desdits appareils.

La présente invention a pour but de pallier ces inconvénients en proposant un montant de châssis permettant une simplification importante de la distribution électrique entre l'alimentation principale d'un coffret de distribution et les différents appareils utilisateurs, un accès plus aisé à ces appareils, ainsi qu'une réduction significative des coûts de production dudit montant.

A cet effet, le montant de châssis, qui se présente essentiellement sous forme d'une barre longitudinale munie, sur sa face opposée à celle de montage sur un mur ou autre support vertical, de moyens de fixation, à intervalles réguliers, de rails de montage d'appareils utilisateurs, est caractérisé en ce qu'il est réalisé par moulage et forme simultanément un conduit de distribution et de répartition de l'énergie électrique à différents niveaux de branchement des appareils de distribution et en ce qu'il est pourvu, dans sa face inférieure, de canaux de logement de conducteurs électriques de distribution, ces conducteurs électriques débouchant, à intervalles réguliers, sur la barre, à proximité des moyens de fixation des rails de montage et étant pourvus de moyens de connexion.

L'invention sera mieux comprise, grâce à la description ci-après, qui se rapporte à un mode de réalisation préféré, donné à titre d'exemple non limitatif, et expliqué avec référence aux dessins schématiques annexés, dans lesquels :
la figure 1 est une vue en perspective par le dessous représentant une paire de montants de châssis conformes à l'invention reliés entre eux par des rails de montage d'appareillages ;
la figure 2 est une vue analogue à celle de la figure 1 représentant l'assemblage vue de dessus, et
la figure 3 est une vue schématique partielle par le dessous d'une extrémité de montant du châssis.

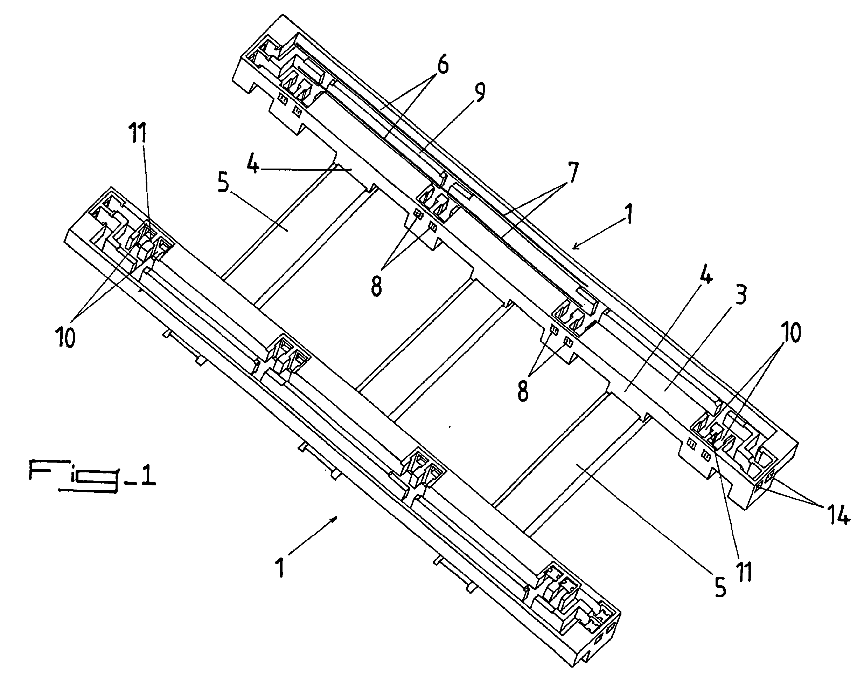

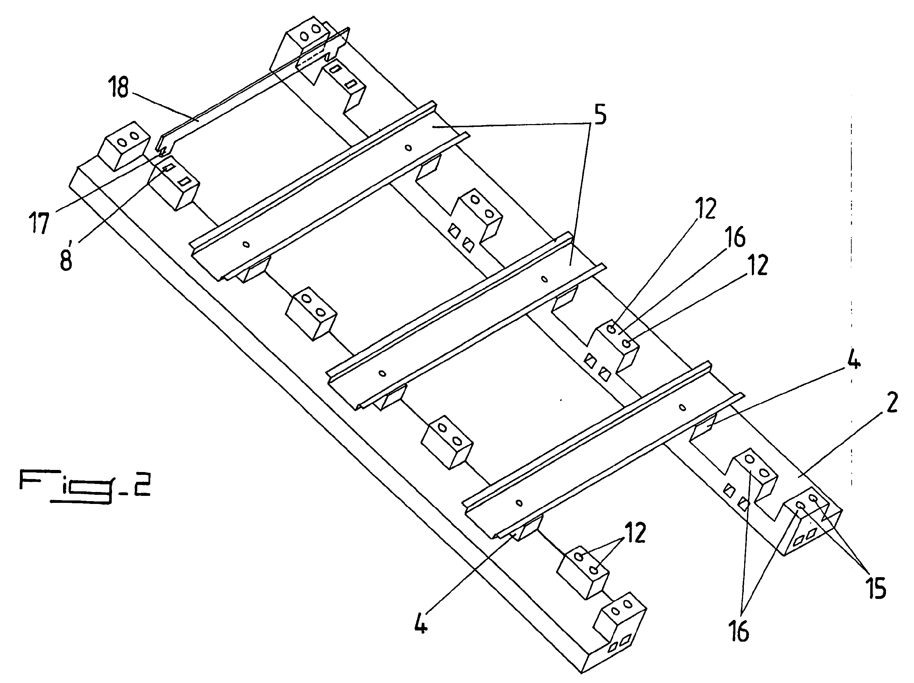

Les figures 1 et 2 des dessins annexés représentent une paire de montants de châssis destinée à équiper un coffret ou une armoire de distribution électrique et dont chaque montant de châssis 1 se présente essentiellement sous forme d'une barre longitudinale munie, sur sa face 2 opposée à celle 3 de montage sur un mur ou autre support vertical, de moyens 4 de fixation, à intervalles réguliers, de rails 5 de montage d'appareils utilisateurs.

Conformément à l'invention, chaque montant de châssis 1 est réalisé par moulage et forme simultanément un conduit de distribution et de répartition de l'énergie électrique à différents niveaux de branchement des appareils de distribution et est pourvu, dans sa face inférieure 3, de canaux 6 de logement de conducteurs électriques 7 de distribution, ces conducteurs électriques débouchant, à intervalles réguliers, sur la barre, à proximité des moyens 4 de fixation des rails de montage 5 et étant pourvus de moyens de connexion 8. De préférence, chaque montant de châssis 1 est constitué en une matière synthétique moulée par injection.

Les canaux 6 de logement des conducteurs électriques 7 de distribution sont avantageusement séparés par une paroi verticale 9 et les conducteurs électriques 7 débouchent sur une face de la barre formant le montant 1, chacun par l'intermédiaire d'un logement ouvert 10, les logements ouverts 10 adjacents étant séparés par des parois verticales 11.

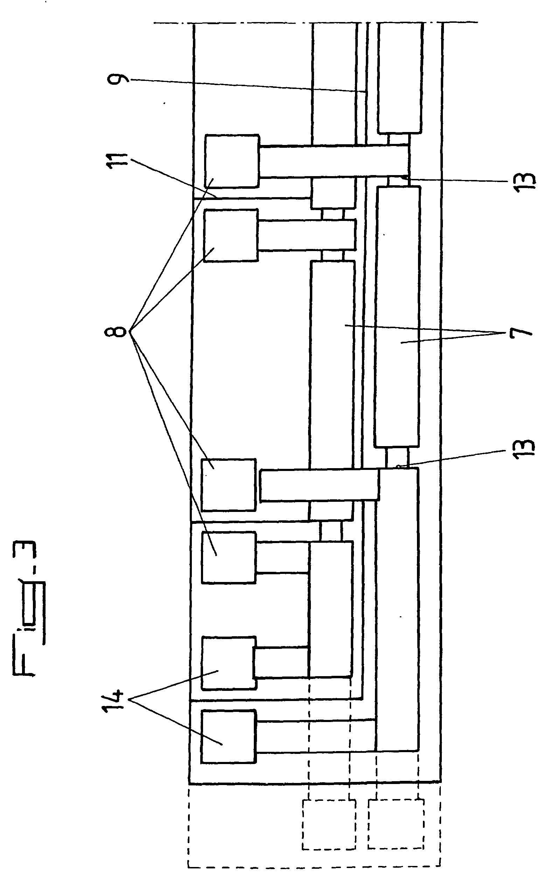

Au niveau des logements ouverts 10, les conducteurs électriques 7 sont pourvus des moyens de connexion 8 (figure 3), dont l'ouverture correspond à la face du montant 1.

Ces moyens de connexion 8 peuvent être constitués sous forme de bornes de raccordement, dont le moyen de serrage est accessible par l'intermédiaire d'un perçage 12 prévu sur la face supérieure du montant 1, chaque borne de raccordement 8 étant reliée au conducteur électrique 7 correspondant, par l'intermédiaire d'une soudure 13 ou analogue, à une portion correspondante dénudée du conducteur 7.

Il est également possible, selon une variante de réalisation de l'invention, de prévoir que les moyens de connexion peuvent être sous forme de contacts d'enfichage 8' débouchant dans la face supérieure du montant 1 et destinés à l'emboîtage d'un contact correspondant 17 d'une barre de pontage 18 ou analogue. L'utilisation d'une telle barre de pontage 18 permet la connexion électrique d'appareils de distribution munis de contacts à enfichage, par simple emboîtement de ces contacts dans une ouverture correspondante de la barre 18. Cette ouverture peut être une ouverture calibrée ou une ouverture s'étendant sur toute la longueur de la barre 18.

Chaque montant 1 est pourvu, à au moins une extrémité, de moyens de connexion 14 d'alimentation générale des conducteurs 7, ces moyens débouchant sur la paroi latérale du montant 1, comme représenté sur la figure 3 des dessins annexés, ou sur la paroi verticale d'extrémité (voir représentation en traits interrompus de la figure 3). Ces moyens de connexion 14 peuvent être sous la forme de bornes de raccordement, dont le moyen de serrage de l'extrémité du conducteur d'alimentation correspondant est manoeuvrable à travers des perçages 15 prévus dans la paroi supérieure du montant 1 ou encore sous la forme de contacts d'enfichage. Dans la représentation suivant la figure 7, ces moyens de connexion 14 sont reliés à des barrettes en cuivre 14' soudées à l'extrémité des conducteurs 7.

De préférence, les perçages 12 et 15 d'accès aux moyens de serrage équipant les bornes 8 et 14 sont prévus dans des parties 16 en saillie sur la face supérieure 2 des montants 1, ces parties 16 formant simultanément un logement de maintien desdits moyens de serrage. De même, les contacts d'enfichage 8' débouchant dans la face supérieure du montant 1 peuvent être prévus dans des parties en saillie sur la face supérieure 2 des montants 1 et les contacts d'enfichage formant éventuellement les moyens de connexion 14 seront préférentiellement prévus dans au moins une face d'extrémité du montant 1. Une réalisation des moyens de connexion 14 sous forme de moyens d'enfichage permet plus particulièrement un agrandissement de l'ensemble de distribution par simple liaison électrique des conducteurs 7 entre eux par l'intermédiaire de dispositifs enfichables mâle-mâle ou encore de cavaliers, dans le cas où les moyens de connexion 14 sont à sortie latérale.

Les montants de châssis 1 conformes à l'invention permettent ainsi, d'une part, la fixation des rails 5, à intervalles réguliers, sur les moyens 4 en forme de plots, de préférence avec indexation des extrémités des rails 5 sur lesdits moyens 4, puis le montage des différents appareils utilisateurs sur lesdits rails 5.

L'alimentation de chaque rangée d'appareils utilisateurs montée sur un rail correspondant 5 peut simplement être effectuée, de préférence, par raccordement de conducteurs souples, de cavaliers ou d'une barre de pontage sur les moyens de branchement correspondants d'un appareil de la rangée, les autres appareils étant alimentés par l'intermédiaire de barrettes de branchement parallèle reliées simultanément aux bornes de connexion de l'appareil alimenté à partir des moyens de connexion 8 des conducteurs 7 et aux moyens de connexion des autres appareils de la rangée. Il en résulte que le raccordement est affecté à chaque rangée d'appareils et est limité à un minimum et que l'accès aux différents appareils est grandement facilité.

Il est également possible, par utilisation de barres de pontage 18 et d'appareils de distribution munis de moyens de connexion à enfichage, de réaliser la connexion électrique desdits appareils simultanément au montage de ces derniers sur le rail 5 correspondant.

Par ailleurs, du fait de la localisation optimale de l'alimentation des rangées, il n'est plus nécessaire de passer entre les rangées. Les risques liés à un défaut de fixation d'une extrémité d'un fil conducteur et l'éventuel arrachement d'un tel fil pouvant entrer en contact avec d'autres conducteurs sont également considérablement amoindris.

En outre, la prévision des parois verticales 9 et 11 respectivement entre les conducteurs 7 et entre les bornes 8 permet la création d'un diélectrique important évitant tout risque de court-circuit.

Conformément à une autre caractéristique de l'invention, les canaux 6 de logement des conducteurs 7 délimités dans le montant 1 sont avantageusement fermés par une plaque arrière de maintien desdits conducteurs 7, non représentée. Il est également possible de noyer les conducteurs 7 dans une résine isolante.

Grâce à l'invention, il est possible de réaliser des châssis pour coffrets ou armoires de distribution électrique, dans lesquels les conducteurs électriques issus d'une alimentation principale sont entièrement logés dans les montants desdits châssis et permettent une distribution ponctuelle de l'énergie au niveau de chaque rail de fixation d'une rangée d'appareils utilisateurs, de sorte que l'espace délimité entre lesdits montants du châssis restent très facilement accessible pour une intervention sur un appareil, sans risque d'entremêlage de fils de connexion.

En particulier, une répartition avantageuse de quatre conducteurs, à savoir, par exemple, deux par montant 1, permet de couvrir tous les cas d'utilisation.

En outre, dans le cas de châssis pour coffrets ou armoires de grande dimension, il peut facilement être prévu de réaliser une répartition de conducteurs électriques 7 dans des canaux 6 prévus dans les deux montants verticaux 1 formant un châssis. Dans un tel cas, il suffira simplement de veiller à ce que les connexions entre les moyens de connexion 8 et les moyens de connexion correspondants de l'un des appareils de la rangée correspondante soient effectuées correctement, afin d'éviter une interférence avec les connexions effectuées à partir du montant parallèle.

La présente invention est plus particulièrement applicable dans le domaine des coffrets de distribution polyphasés.

Bien entendu, l'invention n'est pas limitée au mode de réalisation décrit et représenté aux dessins annexés. Des modifications restent possibles, notamment du point de vue de la constitution des divers éléments ou par substitution d'équivalents techniques, sans sortir pour autant du domaine de protection de l'invention.

## Revendications

1. Montant de châssis (1), se présentant essentiellement sous forme d'une barre longitudinale munie, sur sa face (2) opposée à celle (3) de montage sur un mur ou autre support vertical, de moyens (4) de fixation, à intervalles réguliers, de rails (5) de montage d'appareils utilisateurs, **caractérisé en ce qu'**il est réalisé par moulage et forme simultanément un conduit de distribution et de répartition de l'énergie électrique à différents niveaux de branchement des appareils de distribution et **en ce qu'**il est pourvu, dans sa face inférieure (3), de canaux (6) de logement de conducteurs électriques (7) de distribution, ces conducteurs électriques (7) débouchant, à intervalles réguliers, sur la barre, à proximité des moyens (4) de fixation des rails (5) de montage et étant pourvus de moyens de connexion (8).

2. Montant de châssis, suivant la revendication 1, **caractérisé en ce qu'**il est constitué en une matière synthétique moulée par injection.

3. Montant de châssis, suivant la revendication 1, **caractérisé en ce que** les canaux (6) de logement des conducteurs électriques (7) de distribution sont séparés par une paroi verticale (9) et les conducteurs électriques (7) débouchent sur une face de la barre formant le montant (1), chacun par l'intermédiaire d'un logement ouvert (10), les logements ouverts (10) adjacents étant séparés par des parois verticales (11).

4. Montant de châssis, suivant la revendication 3, **caractérisé en ce qu'**au niveau des logements ouverts (10), les conducteurs électriques (7) sont pourvus des moyens de connexion (8), dont l'ouverture correspond à la face du montant (1)

5. Montant de châssis, suivant la revendication 4, **caractérisé en ce que** les moyens de connexion sont constitués sous forme de bornes de raccordement (8), dont le moyen de serrage est accessible par l'intermédiaire d'un perçage (12) prévu sur la face supérieure du montant (1), chaque borne de raccordement (8) étant reliée au conducteur électrique (7) correspondant, par l'intermédiaire d'une soudure (13) ou analogue, à une portion correspondante dénudée du conducteur (7).

6. Montant de châssis, suivant la revendication 4, **caractérisé en ce que** les moyens de connexion sont sous forme de contacts d'enfichage (8') débouchant dans la face supérieure du montant (1) et destinés à l'emboîtage d'un contact correspondant (17) d'une barre de pontage (18) ou analogue.

7. Montant de châssis, suivant la revendication 1, **caractérisé en ce qu'**il est pourvu, à au moins une extrémité, de moyens de connexion (14) d'alimentation générale des conducteurs (7), ces moyens débouchant sur la paroi latérale du montant (1) ou sur la paroi verticale d'extrémité.

8. Montant de châssis, suivant la revendication 7, **caractérisé en ce que** les moyens de connexion (14) sont sous la forme de bornes de raccordement, dont le moyen de serrage de l'extrémité du conducteur d'alimentation correspondant est manoeuvrable à travers des perçages (15) prévus dans la paroi supérieure du montant (1) ou encore sous la forme de contacts d'enfichage.

9. Montant de châssis, suivant l'une quelconque des revendications 5 et 8, **caractérisé en ce que** les perçages (12 et 15) d'accès aux moyens de serrage équipant les bornes (8 et 14) sont prévus dans des parties (16) en saillie sur la face supérieure (2) des montants (1), ces parties (16) formant simultanément un logement de maintien desdits moyens de serrage.

10. Montant de châssis, suivant l'une quelconque des revendications 6 et 8, **caractérisé en ce que** les contacts d'enfichage (8') débouchant dans la face supérieure du montant (1) sont prévus dans des parties en saillie sur la face supérieure (2) des montants (1) et les contacts d'enfichage formant éventuellement les moyens de connexion (14) sont prévus dans au moins une face d'extrémité du montant (1).

11. Montant de châssis, suivant la revendication 1, **caractérisé en ce que** les canaux (6) de logement des conducteurs (7) délimités dans le montant (1) sont fermés par une plaque arrière de maintien desdits conducteurs (7).

12. Montant de châssis, suivant la revendication 1, **caractérisé en ce que** les conducteurs 7 disposés dans les canaux (6) délimités dans le montant (1) sont noyés dans une résine isolante.

## Claims

1. Frame upright (1) basically in the form of a longitudinal bar provided, on its face (2) opposing that (3) for mounting on a wall or other vertical support, with means (4) for fixing, at uniform intervals, rails (5) for mounting user equipment, **characterised in that** it is produced by moulding and forms at the same time a conduit for distributing electrical energy to various connections of the distributors, and **in that** it is provided, in its lower face (3), with channels (6) for accommodating electrical distribution conductors (7), these electrical conductors (7) merging, at uniform intervals, with the bar, in proximity to the means (4) for fixing the mounting rails (5) and being provided with connection means (8).

2. Frame upright according to claim 1, **characterised in that** it consists of an injection- moulded synthetic material.

3. Frame upright according to claim 1, **characterised in that** the channels (6) for accommodating the electrical distribution conductors (7) are separated by a vertical wall (9) and the electrical conductors (7) merge with a face of the bar forming the upright (1), each via an open recess (10), the adjacent open recesses (10) being separated by vertical walls (11).

4. Frame upright according to claim 3, **characterised in that** in the region of the open recesses (10), the electrical conductors (7) are provided with connection means (8), the opening in which corresponds to the face of the upright (1).

5. Frame upright according to claim 4, **characterised in that** the connection means are in the form of terminals (8), the clamping means of which is accessible via a perforation (12) provided on the upper face of the upright (1), each terminal (8) being connected to the corresponding electrical conductor (7), via a weld (13) or the like, at a corresponding stripped portion of the conductor (7).

6. Frame upright according to claim 4, **characterised in that** the connection means are in the form of plug-in contacts (8'), which merge with the upper face of the upright (1) and are intended for fitting a corresponding contact (17) of a bridging bar (18) or the like.

7. Frame upright according to claim 1, **characterised in that** it is provided, at one end at least, with connection means (14) for the general supply of the conductors (7), these means merging with the lateral wall of the upright (1) or with the vertical end wall.

8. Frame upright according to claim 7, **characterised in that** the connection means (14) are in the form of terminals, of which the means for clamping the end of the corresponding line conductor is manoeuvrable through perforations (15) provided in the upper wall of the upright (1), or else are in the form of plug-in contacts.

9. Frame upright according to any one of claims 5 and 8, **characterised in that** the perforations (12 and 15) for access to the clamping means fitted to the terminals (8 and 14) are provided in protruding portions (16) on the upper face (2) of the uprights (1), these portions (16) forming at the same time a recess for holding said clamping means.

10. Frame upright according to any one of claims 6 and 8, **characterised in that** the plug-in contacts (8'), which merge with the upper face of the upright (1), are provided in protruding portions over the upper face (2) of the uprights (1), and the plug-in contacts, which may form the connection means (14), are provided in at least one end face of the upright (1).

11. Frame upright according to claim 1, **characterised in that** the channels (6) for accommodating the conductors (7), which channels are delimited in the upright (1), are closed by a rear plate for holding said conductors (7).

12. Frame upright according to claim 1, **characterised in that** the conductors (7) arranged in the channels (6) delimited in the upright (1) are steeped in an insulating resin.

## Patentansprüche

1. Tragschiene (1), die im Wesentlichen die Form eines Längsträgers aufweist, der auf seiner der Seite (3) für die Montage an einer Wand oder einer sonstigen vertikalen Tragvorrichtung gegenüberliegenden Seite (2) in regelmäßigen Abständen mit Mitteln (4) zur Befestigung von Montageschienen (5) für Geräte versehen ist, **dadurch gekennzeichnet, dass** sie mittels Spritzguss gefertigt ist und gleichzeitig eine Leitung zur Verteilung bzw. Aufteilung von elektrischer Energie auf verschiedene Anschlussniveaus der Verteilergeräte bildet, dass sie an ihrer Rückseite (3) Kanäle (6) zur Aufnahme von Stromschienen (7) aufweist, und dass die genannten Stromschienen (7) in regelmäßigen Abständen an dem Längsträger in der Nähe der Mittel (4) zur Befestigung der Montageschienen (5) münden und mit Verbindungsmitteln (8) versehen sind.

2. Tragschiene nach Anspruch 1, **dadurch gekennzeichnet, dass** sie aus Kunststoff spritzgegossen ist.

3. Tragschiene nach Anspruch 1, **dadurch gekennzeichnet, dass** die Kanäle (6) zur Aufnahme der Stromschienen (7) durch eine vertikale Wand (9) unterteilt sind und die Stromschienen (7) jeweils über eine offene Aufnahme (10) an einer Seite der Tragschiene münden, wobei die offenen Aufnahmen (10) jeweils durch vertikale Wände (11) unterteilt sind.

4. Tragschiene nach Anspruch 3, **dadurch gekennzeichnet, dass** die Stromschienen (7) im Bereich der offenen Aufnahmen (10) mit Verbindungsmitteln (8) versehen sind, deren Öffnung mit der Seitenfläche des Schenkels (1) korrespondiert.

5. Tragschiene nach Anspruch 4, **dadurch gekennzeichnet, dass** die Verbindungsmittel die Form von Anschlussklemmen (8) haben, deren Klemmmittel über eine Bohrung (12) zugänglich ist, die an der Vorderseite der Tragschiene (1) angeordnet ist, und dass jede Anschlussklemme (8) mit der entsprechenden Stromschiene (7) über eine Lötstelle (13) oder dergleichen an einem entsprechenden freigelegten Teil der Stromschiene (7) verbunden ist.

6. Tragschiene nach Anspruch 4, **dadurch gekennzeichnet, dass** die Verbindungsmittel die Form von Steckkontakten (8') haben, die an der Vorderseite der Tragschiene (1) münden und dazu bestimmt sind, einen entsprechenden Kontakt (17) einer Verbindungsbrücke (18) oder dergleichen aufzunehmen.

7. Tragschiene nach Anspruch 1, **dadurch gekennzeichnet, dass** sie an mindestens einem Ende mit Verbindungsmitteln (14) zur Hauptversorgung der Stromschienen (7) versehen ist, wobei die genannten Mittel an der Seitenwand der Tragschiene (1) oder an der vertikalen Abschlusswand münden.

8. Tragschiene nach Anspruch 7, **dadurch gekennzeichnet, dass** die Verbindungsmittel (14) entweder die Form von Anschlussklemmen, deren Klemmmittel am Ende der entsprechenden Stromschienen über Bohrungen (15) zu betätigen ist, die in der oberen Wand der Tragschiene (1) angeordnet sind, oder aber die Form von Steckkontakten haben.

9. Tragschiene nach einem der Ansprüche 5 und 8, **dadurch gekennzeichnet, dass** die Bohrungen (12 und 15) für den Zugang zu den Klemmmitteln, mit denen die Anschlussklemmen (8 und 14) ausgerüstet sind, in Teilen (16) vorgesehen sind, die über die Oberseite (2) der Tragschiene (1) hervorstehen, wobei die genannten Teile (16) gleichzeitig eine Halterungsaufnahme für die genannten Klemmmittel bilden.

10. Tragschiene nach einem der Ansprüche 6 und 8, **dadurch gekennzeichnet, dass** die Steckkontakte (8'), die an der Vorderseite der Tragschiene (1) münden, in hervorstehenden Teilen an der Vorderseite (2) der Tragschiene (1) vorgesehen sind und dass die Steckkontakte, die gegebenenfalls die Verbindungsmittel (14) bilden, in mindestens einer Endfläche der Tragschiene (1) vorgesehen sind.

11. Tragschiene nach Anspruch 1, **dadurch gekennzeichnet, dass** die Kanäle (6) zur Aufnahme der Stromschienen (7) über eine hintere Halteplatte der genannten Stromschienen (7) abgeschlossen sind.

12. Tragschiene nach Anspruch 1, **dadurch gekennzeichnet, dass** die in den Kanälen (6) angeordneten Stromschienen (7) mit Isolierharz vergossen sind.
